(19) Europäisches Patentamt
European Patent Office
Office européen des brevets

(11) EP 2 963 871 B1

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(51) Int Cl.:
*H04L 12/721* (2013.01)    *H04N 21/61* (2011.01)
*H04L 29/08* (2006.01)    *H04J 14/02* (2006.01)

(21) Anmeldenummer: **14175000.0**

(22) Anmeldetag: **30.06.2014**

(54) **Effiziente Transportnetz Architektur für Content Delivery Network**

Efficient transport network architecture for content delivery network

Architecture de réseau de transport efficace pour réseau CDN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.01.2016 Patentblatt 2016/01**

(73) Patentinhaber: **Deutsche Telekom AG**
**53113 Bonn (DE)**

(72) Erfinder:
• **Braun, Ralf-Peter**
  **12305 Berlin (DE)**
• **Düser, Michael**
  **12161 Berlin (DE)**
• **Monath, Thomas**
  **23923 Schönberg (DE)**

(74) Vertreter: **Vossius & Partner**
**Patentanwälte Rechtsanwälte mbB**
**Siebertstrasse 3**
**81675 München (DE)**

(56) Entgegenhaltungen:
EP-A1- 2 073 501    WO-A1-01/55855
WO-A1-2013/044987    WO-A1-2013/164044
WO-A2-01/76192    US-A1- 2010 238 924
US-A1- 2014 143 409

• CSABA KISS KALLO ET AL: "Benefits of optical packet switching for router by-pass in metro networks", FUTURE NETWORK&MOBILE SUMMIT (FUTURENETW), 2012, IEEE, 4. Juli 2012 (2012-07-04), Seiten 1-8, XP032231989, ISBN: 978-1-4673-0320-0
• JUAN P FERNANDEZ-PALACIOS ET AL: "IP offloading over multi-granular photonic switching technologies", 36TH EUROPEAN CONFERENCE AND EXHIBITION ON OPTICAL COMMUNICATION : (ECOC 2010) ; TORINO, ITALY, 19 - 23 SEPTEMBER 2010, IEEE, PISCATAWAY, NJ, USA, 19. September 2010 (2010-09-19), Seiten 1-3, XP031789872, ISBN: 978-1-4244-8536-9
• ADEL A M SALEH ET AL: "All-Optical Networking Evolution, Benefits, Challenges, and Future Vision", PROCEEDINGS OF THE IEEE, IEEE. NEW YORK, US, Bd. 100, Nr. 5, 1. Mai 2012 (2012-05-01), Seiten 1105-1117, XP011441697, ISSN: 0018-9219, DOI: 10.1109/JPROC.2011.2182589

EP 2 963 871 B1

## Beschreibung

### Technisches Gebiet

Die vorliegende Erfindung betrifft ein System sowie ein Verfahren zur effizienten Verteilung und/oder Synchronisation von Content Delivery Networks (CDN) Datenkapazitäten über eine passive transparente optisch geroutete Transportnetzarchitektur.

### Stand der Technik

Ein Content Delivery Network (CDN), oder auch Content Distribution Network genannt, ist ein Netz verteilter und über IP-Verbindungen verbundener Server, mit dem Inhalte, insbesondere große Mediendateien, ausgeliefert werden. CDN Knoten sind üblicherweise auf viele Orte und oft auch auf viele Backbones verteilt. Sie arbeiten zusammen, um Anfragen (Requests) von End-Nutzern nach Inhalten (Content) möglichst umfassend und ökonomisch zu bedienen. Im Hintergrund werden die Daten im Netz so vorgehalten (Caching), dass die jeweilige Auslieferung entweder möglichst schnell geht (Performance-Optimierung) oder möglichst wenig Bandbreite verbraucht (Kosten-Optimierung), oder beides zugleich. Große CDNs unterhalten tausende Knoten mit zehntausenden Servern. Prinzipiell gibt es zumindest zwei Arten von CDN Knoten, die durch ihre Funktionalität (Inhalt, ...) definiert sind: den CDN Origin und den CDN Cache. Gemäß dem Stand der Technik befindet sich der CDN Origin in einem Sternpunkt des CDN Netzes (Root, Hub). Der CDN Cache befindet sich in der Fläche des Netzes (Leaf, Spoke), d.h., es gibt es eine Root-Leaf (Hub & Spoke) Struktur.

Der heutige Internet Verkehr wird dominiert von wenigen großen CDN (Akamai, Limelight, Google) die den Inhalt weniger großer Anbieter weltweit verteilen. Zudem haben große Anbieter wie Youtube und Google auch eigene CDNs. Beispielsweise generiert Netflix ca. 30% des Datenverkehrs in Nordamerika während Hauptverkehrszeiten. Hierzu verwendet Netflix mehrere CDN Provider. Deshalb sind hochbitratige, hoch skalierbare und gleichzeitig sehr kosteneffiziente Transportlösungen für CDN notwendig, die heute nicht existieren. Mehr als 10% der Gesamtdatenrate des Internets stammt von Google und laut Angaben von Akamai werden ca. 30% der Gesamtrate der Internet Webdaten von Akamai transportiert. Somit steigt die Konzentration von Inhalten auf wenige CDNs. Zudem geht der Trend für Anbieter von Inhalten hin zu Multi-CDN, d.h. die eigenen Inhalte werden über mehrere CDN Provider parallel angeboten.

Bei der Übertragung großer Datenkapazitäten von Content Delivery Network (CDN) Services stoßen die derzeit eingesetzten Übertragungsnetze an ihre Grenzen, da sie nicht für die Übertragung gerichteter hochkapazitiver Datenströme ausgelegt sind, die das Netz blockieren, sondern für die dezentrale Übertragung vieler wahllos eingehender Übertragungsanforderungen unterschiedlicher Datenkapazitäten.

In CDN Applikationen werden sehr hohe Datenkapazitäten zwischen bekannten Lokationen übertragen, zum einen für den abfragenden Datenservice und zum anderen für Synchronisationszwecke. Werden diese Datenströme über herkömmliche öffentliche Netze abgewickelt, dann blockieren diese hochkapazitiven Datenströme zwischen bestimmten Netzpunkten andere Datenströme im Netz. Alternativ erfordern die überproportional wachsenden Bedürfnisse an CDN Verkehr erhebliche Investitionen in die bestehende IP-WDM-Transportnetz-Infrastruktur (WDM: Wavelength Division Multiplexing).

Die derzeit einzig skalierbare Lösung für die Auslieferung von Duplikaten stellt das Multicast-Protokoll in IP dar. Derzeit gibt es große Bestrebungen, das Multicast-Protokoll auch für IPv6 operabel zu machen, insbesondere für die Übertragung von Live-TV (auch "Real-Time TV" oder "Linear TV"). Es besteht somit Bedarf große Datenmengen, vorzugsweise Videodaten zu verteilen.

Ein wesentliches Merkmal von CDN Verkehr ist seine hohe zeitliche und räumliche Dynamik. Aufgrund sehr kurzfristiger Optimierungsintervalle verändern sich Einspeiseort und Einspeisevolumen mit hoher Frequenz. IP-Transportnetze optimieren die zur Verfügung stehenden Kapazitäten, z.B. mittels Linkgewichten, mit deutlich niedrigerer Frequenz, häufig nur einmal täglich. Voraussetzung für die Optimierung von Kapazitäten in IP-Transportnetzen sind sog. "Verkehrsmatrizen" mit deren Hilfe die Kapazitätsbedürfnisse bzw. Kapazitätsbedarfe zwischen Quellen und Senken im Netz unidirektional eindeutig festgelegt werden. Für die hochfrequente Konfiguration von CDNs ist das Konzept einer quasi-statischen Verkehrsmatrix ungeeignet, es könnte IP-Transportnetze durch Miskonfiguration der Linkgewichte in einen instabilen Zustand bringen.

Eine zusätzliche Anforderung zukünftiger Netze ist Auslieferung von "Multipunkt-zu-Punkt", d.h. es werden Inhalte für einen Kunden aus räumlich oder logisch verteilten Quellen zeitgleich/zeitsynchron herangeführt. Beispielhafte Anwendungen sind das Festnetz, Mobilfunknetz, hybride Netze oder drahtlose Netze.

Aktuelle Vorhersagen bezüglich des in Zukunft zu erwartenden Datenverkehrs weisen auf einen weiter exponentiell wachsenden Verkehr hin, der überproportional durch CDNs gespeist wird.

CDN Applikationen stellen erhöhte Anforderungen für den Verkehr an Transportnetze für Latenz, Kapazität, Durchsatz und Datenverluste. Speziell die Video Verteilung stellt für ein CDN besondere Anforderungen hinsichtlich Latenz und Bandbreite. Die Übertragung über das heutige Internet (best effort) bietet keinerlei Übertragungssicherheiten.

Typischerweise ist eine hoch bitratige Echtzeitübertragung nur über kurze Strecken möglich. Die unten dargestellte Tabelle 1, entnommen aus Referenz [1], verdeutlicht hier die Zusammenhänge zwischen Übertragungsstrecke (*Distance (Server to User) in Meilen*) und Übertragungszeit (*Network RTT, Round Trip Time; Download Time 4GB DVD*), Paketverlust (*Typical Packet Loss*) sowie Datendurchsatz (*Throughput*).

*Tabelle 1: Zusammenhang zwischen Entfernung, Durchsatz und Download Zeit in einem CDN Netz (siehe [1])*

| Distance (Server to User) | Network RTT | Typical Packet Loss | Throughput | 4GB DVD Download Time |
|---|---|---|---|---|
| Local: <100 mi. | 1.6 ms | 0.6% | 44 Mbps (high quality HDTV) | 12 min. |
| Regional: 500-1.000 mi. | 16 ms | 0.7% | 4 Mbps (basic HDTV) | 2.2 hrs. |
| Cross-continent: ~3,000 mi. | 48 ms | 1 .0% | 1 Mbps (SD TV) | 8.2 hrs. |
| Multi-continent: ~6,000 mi. | 96 ms | 1.4% | 0.4 Mbps (poor) | 20 hrs |

Ziel für zukünftige Netzarchitekturen ist ein applikationsagnostisches Design. Grund dafür sind z.B. ineffiziente Übertragungsprotokolle wie z.B. TCP (Transmission Control Protocol), das bei Paketverlusten auf der IP-Schicht (Schicht 3 des OSI Models) die Übertragungskapazität durch das Anfordern der verlorenen Pakete zusätzlich verringert.

US 2010/0238924 A1 betrifft eine Netzstruktur, in der eine Verarbeitungsvorrichtung zwischen mindestens einer Inhaltsquelle und mindestens einem Teilnehmergerät innerhalb eines Internet Protocol Television (IPTV) -Systems gekoppelt ist.

WO 01/55855 A1 offenbart ein Verfahren und System zum Spiegeln und Zwischenspeichern von komprimiertem Inhalt, um es Randgeräten in einem verteilten Netzwerk zu ermöglichen, komprimierte Versionen von Dateien zu empfangen oder zu erzeugen.

WO 2013/164044 A1 offenbart ein Verfahren und eine Vorrichtung bzw. ein System zum Aufbau und Betrieb eines vorzugsweise modularen, hochskalierbaren, sehr einfachen, kostengünstigen und nachhaltig transparenten, optisch geführten Netzes für große Netzwerkkapazitäten, vorzugsweise Netzwerkkapazitäten von mehr als 1 Petabit (s). Insbesondere ermöglicht es ein Entkoppeln eines quasi-passiven Kernnetzes von den passiven und / oder aktiven Randfunktionalitäten in oder an den Netzknoten an der Kernnetzkante, so dass die Kernnetzinfrastruktur nicht verändert oder manipuliert werden muss für zusätzliche Netzwerkskalierung.

EP 2 073 501 A1 offenbart einen Konzentrator zum Speichern und Weiterleiten von Medieninhalten. Der Medieninhalt wird von einem Inhaltsserver an eine Mehrzahl von Medienabspielgeräten gesendet.

Die Artikel von Csaba Kiss Kallo et al, "Benefits of optical packet switching for router by-pass in metro networks", 2012-07-04, und Adel A. M. Saleh et al, "All-Optical Networking Evolution, Benefits, Challenges, and Future Vision", 1. Mai 2012, Seiten 1105-1117, betreffen optische Netzwerke mit optischen Switchen und optisch-elektrisch-optischen Komponenten.

## Zusammenfassung der Erfindung

Der Gegenstand der vorliegenden Erfindung ist im unabhängigen Anspruch 1 definiert. Weitere bevorzugte Ausführungsformen der vorliegenden Erfindung sind in den abhängigen Ansprüchen definiert.

Durch die neue erfindungsgemäße CDN Netzstruktur kann insbesondere eine Hub & Spoke Struktur aufgrund einer neuen möglichen Netzvermaschung erreicht werden, die vorher so nicht möglich war. Zudem kann mit der vorliegenden Erfindung eine CDN Netzstruktur erweitert werden, wenn es erwünscht ist. Im Folgenden werden die Begriffe CDN Origin und CDN Origin Knoten synonym verwendet. Entsprechend sollen auch die Begriffe CDN cache und CDN cache Knoten synonym verstanden werden.

Die vorliegende Erfindung betrifft ein Content Delivery Netzwerk (CDN) mit mindestens einem CDN Origin Knoten und mehreren CDN cache Knoten, die mit dem CDN Origin Knoten über ein optisches Transportnetz, OTN, verbunden sind wie in Anspruch 1 beansprucht. Die vorliegende Erfindung ist unter anderem dadurch gekennzeichnet, dass die Übertragung und/oder das Routing von einem CDN cache Knoten zu einem CDN Origin Knoten und/oder umgekehrt unterhalb der Schicht 3 des OSI Models erfolgt.

Vorzugsweise ist das das optische Transportnetz ein passives transparentes optisch geroutete Transportnetz, vorzugsweise ein OTN nach ITU-T Standard G.709, sodass eine direkte transparente optische Verbindungen von einem CDN cache Knoten zu einem CDN Origin Knoten, und umgekehrt möglich ist. Zusätzlich oder alternativ ist zudem bevorzugt, dass eine direkte transparente optische Verbindungen von einem CDN cache Knoten zu einem anderen CDN cache Knoten, und umgekehrt, möglich ist.

Gemäß einer bevorzugten Ausführungsform sind die CDN cache Knoten mit dem mindestens einen CDN Origin Knoten über eine Sterntopologie verbunden. Die Verbindung wird vorzugsweise über eine vermaschte Sterntopologie, weiter bevorzugt über eine vollvermaschte Sterntopologie erreicht.

Die Übertragung von Daten bzw. das Routing von CDN cache Knoten zum CDN Origin Knoten und umgekehrt erfolgt ohne ein IP Overlaynetzt.

Vorzugsweise erfolgt eine Übertragung von Daten von einem CDN Origin zu einer ersten node, dann über ein NxN AWG zu einer zweiten node an einen CDN cache. Die Übertragung von NxN AWG zu der zweiten node erfolgt vorzugsweise über ein OTN. Die Komponenten CDN Origin, ersten node, NxN AWG, OTN, zweite node und (erste) CDN cache sind vorzugsweise Komponenten einer ersten Netzebene.

Zudem erfolgt auch eine Übertragung weiter in eine zweite Netzebene, d.h., von der zweiten node über ein MxM AWG zu einer user node (kurz user) übertragen wird und dann zu einem (zweiten) CDN cache. Vorzugsweise ist M ungleich N, vorzugsweise M < N.

Das OTN vom CDN Origin Knoten zu den mehreren CDN cache Knoten stellt eine erste CDN Netzebene dar. und das optische Routing mittels NxN und einer Vollvermaschung erfolgt durch DWDM, Dense Wavelength Division Multiplex, Kanäle.

Eine zweite CDN Netzebene von CDN cache Knoten zu CDN cache Knoten wird mit weiterer passive "optische" MxM AWG Elementen definiert, wodurch
auch in der zweiten CDN Netzebene eine Wellenlängen adressierte Vollvermaschung für transparente optische Verbindungen zwischen den CDN Origin und CDN cache Knoten möglich wird, vorzugsweise für folgende N, M Kombinationen: [3, 32]; [4,24]; [6,16]; [8, 12]; [12,8]; [16, 6]; [24, 4] und [32, 3].

Erfindungsgemäß ist das CDN mit einem weiteren CDN über ein optisches Transportnetz verbunden, sodass Interconnection Verkehre zwischen den beiden CDNs unterhalb der Schicht 3 des OSI Models, vorzugsweise direkt, passiv und optisch transparent geroutet werden, vorzugsweise bidirektional.

Zudem ist bevorzugt, dass die Interconnection Verkehre zwischen den CDN Origin Knoten der beiden CDN Netze erfolgen und/oder zwischen verschiedenen CDN Origin und CDN cache Knoten erfolgen.

Gemäß einer weiteren bevorzugten Ausführungsform können unterschiedliche CDN Services, wie CDN Contentverkehre, CDN Synchronisationsverkehre und CDN Interconnectionsverkehre, mittels unterschiedlicher Wellenlängen adressierter optischer Kanäle separat und unabhängig voneinander übertragen und/oder geroutet werden.

Die vorliegende Erfindung betrifft nicht nur das CDN, sondern auch ein entsprechendes Verfahren zum Aufbau und/oder Betreiben des CDN. So betrifft die vorliegende Erfindung beispielsweise ein Verfahren zur Übertragung (Delivery) und Verteilen von digitalen Inhalten (Content) über ein Content Delivery Netwerk (CDN) mit mindestens einem CDN Origin Knoten und mehreren CDN cache Knoten, die mit dem CDN Origin Knoten über ein optisches Transportnetz verbunden sind. Erfindungsgemäß erfolgt das Routing der zu übertragenden digitalen Inhalte von dem mindestens einen CDN Origin Knoten zu den mehreren CDN cache Knoten, und umgekehrt, unterhalb der Schicht 3 des OSI Models.

**Kurze Beschreibung der Zeichnungen**

Im Folgenden werden bekannte CDN Architekturen sowie bevorzugte Ausführungsformen der vorliegenden Erfindung unter Bezugnahme auf die Figuren beschrieben. Es zeigen:

Fig. 1     eine konventionelle CDN "Stern" Architektur in Europa;

Fig. 2     eine strukturelle Darstellung zweier unabhängiger konventioneller Content Delivery Networks CDN #1 und CDN #2;

Fig. 3     eine strukturelle Darstellung eines CDN Netzes gemäß der Erfindung;

Fig. 4     eine Darstellung eines konventionellen bidirektionalen CDN Interconnectionverkehrs zwischen CDN Origin Knoten verschiedener CDN Netze unter Nutzung des IP Transportnetzes (CDN over IP over OTN);

Fig. 5     eine Darstellung des bidirektionalen CDN Interconnectionverkehrs zwischen CDN Origin Knoten verschiedener CDN Netze unter Nutzung der CDN Architektur gemäß der vorliegenden Erfindung(CDN over OTN);

Fig. 6     eine Darstellung eines konventionellen CDN Verteilverkehrs innerhalb eines CDN von CDN Origin zu CDN caches;

Fig. 7     CDN Verteilverkehre, unter Nutzung der CDN Architektur gemäß der vorliegenden Erfindung (CDN over OTN);

Fig. 8     konventionelle CDN Synchronisationsverkehre innerhalb eines CDN Netzes von CDN Origin zu CDN cache Knoten;

Fig. 9     CDN Synchronisationsverkehre innerhalb eines CDN von CDN Origin zu CDN caches gemäß der vorliegenden Erfindung;

Fig. 10    eine Netzarchitektur optisch transparent verschalteter zwei Netzebenen; und

Fig. 11    ein Ende-zu-Ende-Knoten Verbindungsschema zwischen zwei verschiedenen Bereichen der zweiten Netzebene;

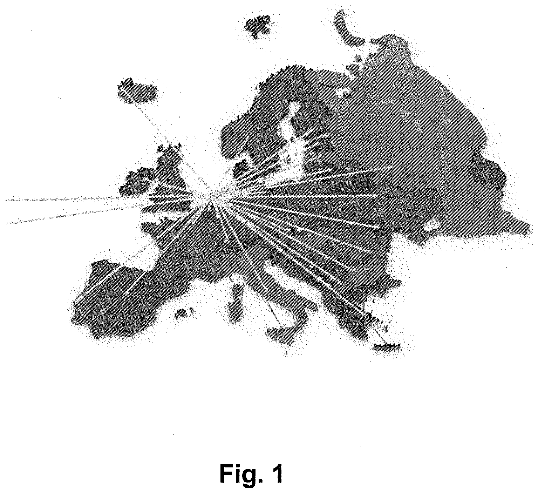

Figur 1 zeigt eine konventionelle CDN Architektur in Europa (Quelle: StreamZilla). In konventionellen CDN Netzen, entsprechend Figur 1 werden verschiedene CDN Verkehre, z.B. CDN Interconnection Verkehr, d.h. Verkehr zwischen verschiedenen CDN Netzen (vorzugsweise bidirectional), CDN Verteil-Verkehr innerhalb eines CDN von CDN Origin zu CDN caches (überwiegend downstream), CDN Synchronisationsverkehr innerhalb eines CDN zwischen CDN Origin und CDN caches und CDN cache zu CDN caches, über dedizierte CDN Overlay-Netze zwischen den entsprechenden CDN Knoten übertragen, die die existierende konventionellen IP/MPLS (Multiprotocol Label Switching) optische Transportnetze (OTN) nutzen (CDN over IP over OTN). Damit hängen sie von deren OTN und IP Router Ressourcen ab, die sie mit vielen anderen IP Services gemeinsam nutzen. Dadurch können in den verschiedenen IP Diensten Übertragungsverluste auftreten wenn Kapazitätsüberlastungen bei den bestehenden IP Transportverbindungen auftreten.

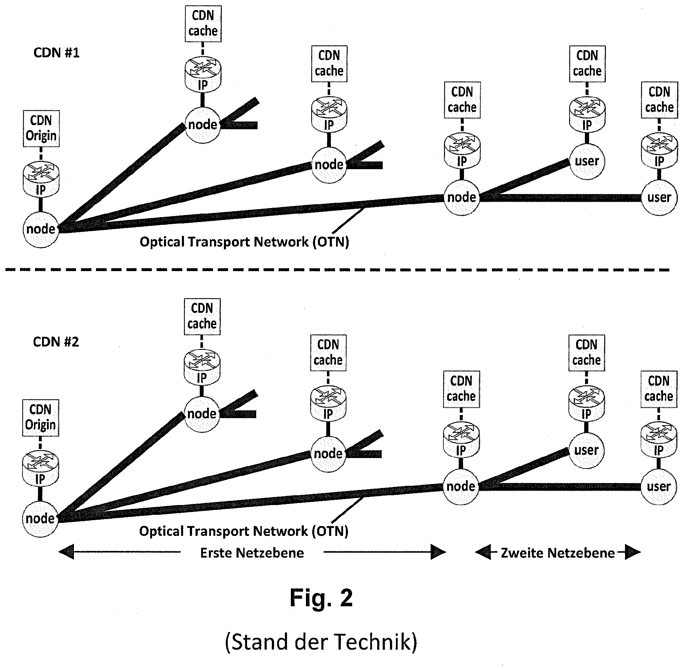

In Figur 2 ist die Architektur zweier unabhängiger konventioneller Content Delivery Networks CDN #1 und CDN #2 dargestellt, mit den Komponenten CDN Origin und CDN cache, wobei CDN caches Content uploaden und/oder downloaden.

Im konventionellen CDN sind die einzelnen Komponenten des CDN Netzes über ein IP/MPLS (Interne Protokol/ MultiProtocol Label Switching) Transportnetz miteinander verbunden, wobei das IP/MPLS Transportnetz das optische Transportnetz (OTN) nutzt. MPLS ermöglicht die verbindungsorientierte Übertragung von Datenpaketen in einem verbindungslosen Netz entlang eines zuvor aufgebauten ("signalisierten") Pfads. Dieses Vermittlungsverfahren wird überwiegend von Betreibern großer Transportnetze eingesetzt, die Sprach- und Datendienste auf Basis von IP anbieten (große Internetprovider). Somit basieren die CDN Verbindungen auf einer CDN over IP over OTN Architektur die zwingend die IP Router Ressourcen des IP Transportnetzes gemeinsam mit CDN fremden Services nutzen muss. Damit ist das konventionelle CDN Netz vom IP Transportnetz und weiteren IP Services abhängig, und es können Übertragungsverluste durch CDN fremde Services bei Überlastung des IP Transportnetzes auftreten.

Die Verbindungen zwischen den CDN caches (im Folgenden auch CDN cache Knoten genannt) müssen gemäß dem Stand der Technik über den CDN Origin Knoten als Sternpunkt des CDN Netzes erfolgen, unter Nutzung der notwendigen CDN over IP over OTN Ressourcen. Direkte transparente optische Verbindungen zwischen den CDN caches gemäß der vorliegenden Erfindung sind vorzugsweise nicht möglich.

Die physikalisch optische Verbindung kann dabei auch entsprechende Accessnetze nutzen. Insbesondere sind die CDN Verbindungen vom IP Transportnetz abhängig, so dass im Falle von Überlastung durch CDN fremde IP Services auch CDN Übertragungsverluste auftreten können.

Es ist eine Aufgabe der vorliegenden Erfindung die Nachteile des Standes der Technik zu überwinden. Die Aufgabe wird mit den Merkmalen der unabhängigen Ansprüche gelöst. Bevorzugte Ausführungsformen der vorliegenden Erfindung sind in den abhängigen Ansprüchen definiert.

Insbesondere wird erfindungsgemäß eine passive transparente optisch geroutete Transportnetzarchitektur für geographisch dediziert wahlfreie Punkte bereitgestellt.

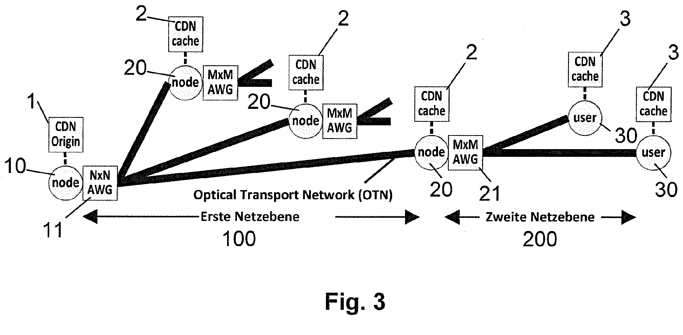

In Figur 3 ist eine der Erfindung zugrunde liegende CDN Architektur schematisch dargestellt. Im Unterschied zu konventionellen CDN Netzen kann erfindungsgemäß ein CDN Verkehr über ein optisches Transportnetz, z.B. OTN (CDN over OTN), ohne den IP Layer (IP Schicht, bzw. Schicht 3 des OSI Schichtmodels) realisiert werden.

Vorzugsweise erfolgt eine Übertragung von Daten von einem CDN Origin 1 zu einer ersten node 10, dann über ein NxN AWG 11 zu einer zweiten node 20 und weiter an einen CDN cache 2. Die Übertragung vom NxN AWG 11 zu der zweiten node 20 erfolgt vorzugsweise über ein OTN. Die Komponenten CDN Origin 1, ersten node 10, NxN AWG 11, OTN, zweite node 20 und (erste) CDN cache 2 sind vorzugsweise Komponenten einer ersten Netzebene 100.

Zudem kann auch eine Übertragung weiter in eine zweite Netzebene 200 erfolgen, d.h., von der zweiten node 20 über ein MxM AWG zu einer user node 30 (kurz user) und dann zu einem (zweiten) CDN cache 3 (im Folgenden auch CDN cache der zweiten Netzebene genannt). Vorzugsweise ist M ungleich N, vorzugsweise M < N.

Die CDN Sterntopologie bleibt für das physikalische Fasernetz (optische Netz) vorzugsweise erhalten, wobei im Sternpunkt einer ersten CDN Netzebene 100 (CDN Origin 1 - CDN cache 2) ein passives optisches NxN AWG 11 (Arrayed Waveguide Grating) Element eingesetzt werden kann, beispielsweise wie in der TorNet Architektur **[6]** beschrieben. Dadurch ist mit Hilfe von Wellenlängen adressierten DWDM (Dense Wavelength Division Multiplex) Kanälen eine Vollvermaschung für transparente optische Verbindungen zwischen den CDN Origin und CDN cache Knoten in der ersten Netzebene (ersten CDN Netzebene) möglich (siehe Fig. 3).

In einer bzw. mehreren zweiten CDN Netzebenen 200 (CDN cache -CDN cache) können weitere passive optische MxM AWG Elemente 21 eingesetzt werden, wodurch auch in der zweiten CDN Netzebene 200 eine Wellenlängen adressierte Vollvermaschung für transparente optische Verbindungen zwischen den CDN Origin 1 und CDN cache Knoten 3 der zweiten Netzebene möglich wird.

Durch geeignete Dimensionierungen der AWG Elemente mit entsprechenden Durchschaltungen in den CDN cache Knoten können zusätzlich zwischen der ersten und der zweiten CDN Netzebenen transparente optische Verbindungen ermöglicht werden.

Die erfindungsgemäßen CDN Netze sind vorzugsweise von den IP Transportnetzen unabhängig; die IP Transportnetz und insbesondere die IP Router Ressourcen und damit auch deren Energiebedarfe kann für die CDN Netze eingespart werden.

Neben der Unabhängigkeit der CDN Services von CDN fremden Services können durch die Erfindung auch verschiedene CDN Services (z.B. CDN Contentverkehre, CDN Synchronisationsverkehre, CDN Interconnectionverkehre) unabhängig voneinander übertragen werden, vorzugsweise aufgrund einer transparenten Wellenlängen adressierten optischen Übertragung (CDN Service over OTN), indem den einzelnen CDN Services verschiedene transparente optische DWDM Kanäle zugewiesen werden. Diese verschiedenen Kanäle können separat und unabhängig voneinander konfiguriert und auch mit unterschiedlichen Qualitätsmerkmalen entsprechend den Anforderungen ausgestattet werden.

Im Gegensatz dazu sind in konventionellen CDN Netzen keine vermaschten transparente Übertragungen in einem CDN Netz möglich, sondern nur CDN over IP over OTN im Rahmen der Sterntopologie der konventionellen CDN Netze. Auch sind keine transparenten optischen Verbindungen zwischen CDN Origin, CDN cache der ersten und/oder CDN cache der zweiten Netzebene möglich.

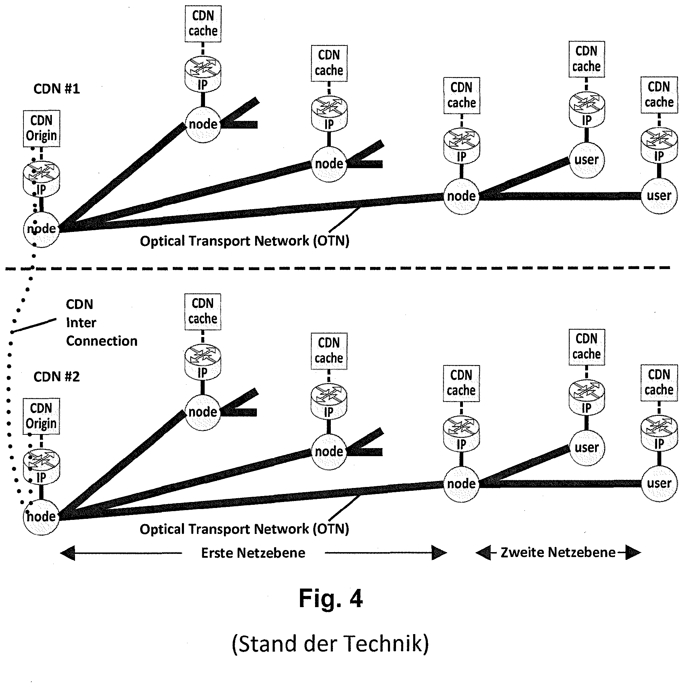

Für eine konventionelle CDN Architektur zeigt Figur 4 einen bidirektionalen CDN Interconnectionverkehr (siehe punktierte Linie •••) zwischen CDN Origin Knoten verschiedener CDN Netze unter Nutzung des konventionellen IP Transportnetzes (CDN over IP over OTN). Insbesondere sind die CDN Interconnectionverkehre auch abhängig vom IP Transportnetz und dessen Kapazitäten und Ressourcen für das optische Transportnetz und deren IP Router. Dadurch können Übertragungsverluste durch Überlastung des IP Transportnetzes auftreten, da sich die verschiedenen CDN Services und auch CDN fremde Services die begrenzten IP Ressourcen teilen müssen.

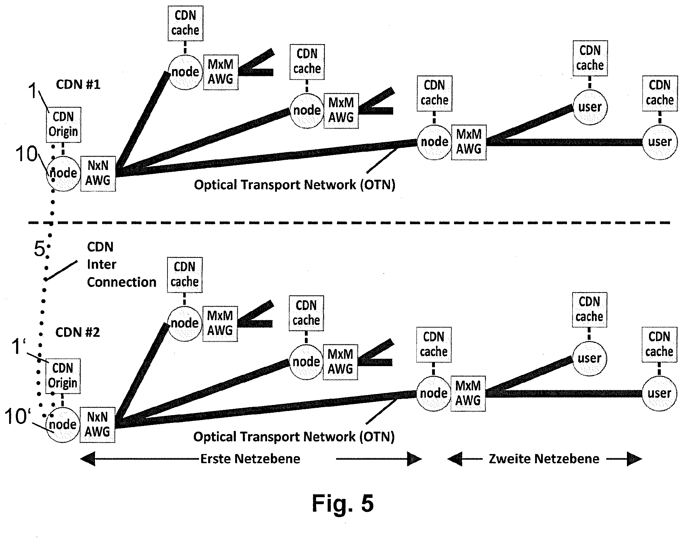

Figur 5 zeigt einen bidirektionalen CDN Interconnectionverkehr 5 (siehe punktierte Linie •••) zwischen CDN Origin Knoten 1, 1' verschiedener CDN Netze unter Nutzung der CDN Architektur der vorliegenden Erfindung (CDN over OTN).

Insbesondere sind hier die CDN Interconnectionverkehre sowohl von anderen CDN Services als auch von CDN fremden Services entkoppelt und unabhängig vom IP Transportnetz aufgrund der Zuweisung eigener Wellenlängenkanäle im OTN Netz.

Vorzugsweise ist die Übertragung der Interconnectionverkehre nicht nur zwischen den CDN Origin Knoten der beiden CDN Netze beschränkt, sondern aufgrund der bevorzugten transparenten optischen Vollvermaschung in der ersten Netzebene und der bevorzugten transparenten optischen Verschaltung der verschiedenen Netzebenen in den CDN cache Knoten, können Interconnectionsverkehre vorzugsweise auch zwischen verschiedenen CDN Origin und CDN cache Knoten der verschiedenen CDN Netze bzw. Netzebenen unabhängig von anderen Services bereitgestellt werden.

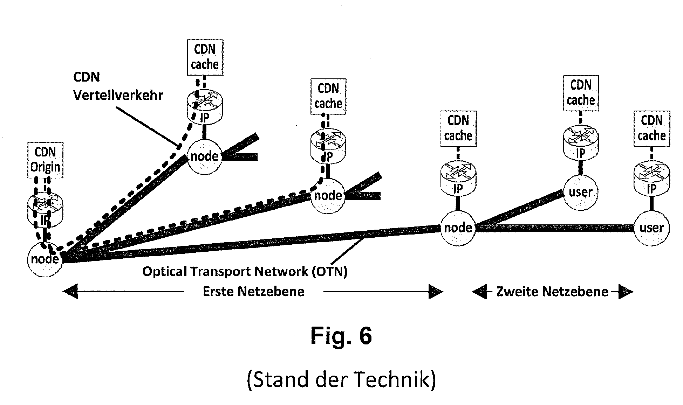

Für eine konventionelle CDN Architektur zeigt Figur 6 CDN Verteilverkehre (siehe gestrichelte Linie - - - -) innerhalb eines CDN von CDN Origin zu CDN cache (überwiegend downstream), insbesondere zu einem CDN cache der ersten Netzebene unter der abhängigen Nutzung des Overlaynetzes vom konventionellen IP over OTN Transportnetz (CDN over IP over OTN). CDN Teilverkehre von populären Internet-Inhalten (downstream) von CDN Origin zu CDN caches nutzen abhängig vom IP Transportnetz dessen Kapazitäten und Ressourcen für das optische Transportnetz und deren IP Router.

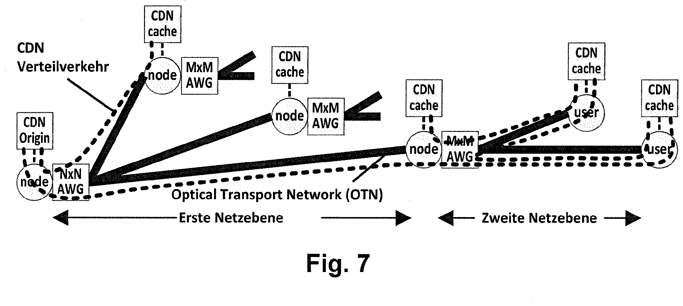

Unter Nutzung der CDN Architektur der vorliegenden Erfindung (CDN over OTN) zeigt Figur 7 CDN Verteilverkehre (siehe gestrichelte Linie - - - -) innerhalb eines CDN Netzes zwischen CDN Origin und CDN caches, insbesondere zwischen CDN Origin und CDN caches einer ersten bzw. einer zweiten Netzebene. Zudem sind auch Verkehre zwischen CDN caches der ersten und zweiten Netzebene und zwischen CDN caches der zweiten Netzeben untereinander dargestellt. Dabei ist die CDN Transportnetz Architektur vom konventionellen CDN over IP over OTN entkoppelt und unabhängig durch Zuweisung separater Wellenlängenkanäle.

CDN Verteilverkehre von populären Internet-Inhalten sind im Gegensatz zu konventionellen CDN Netzen nicht nur zwischen CDN Origin zu CDN caches, sondern auch wahlfrei zwischen CDN Origin, CDN cache der ersten bzw. CDN cache der zweiten Netzebene möglich. Dadurch kann eine wesentliche Entlastung z.B. des CDN Origin Knotens erreicht werden und die CDN Verteilverkehre können individuell zwischen den einzelnen CDN Knoten besser koordiniert werden.

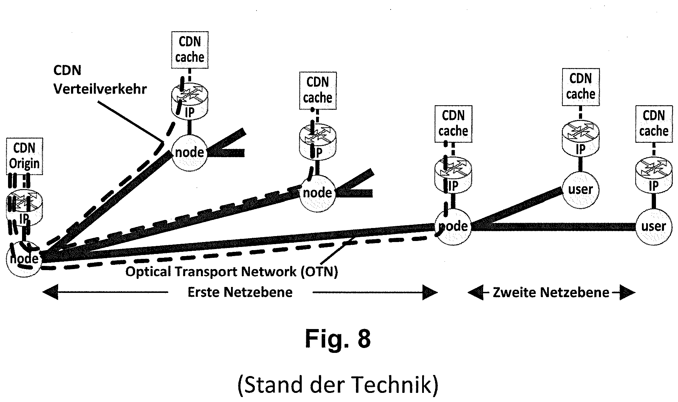

Für eine konventionelle CDN Architektur zeigt Figur 8 CDN Synchronisationsverkehre innerhalb eines CDN Netzes von CDN Origin zu CDN cache Knoten unter der abhängigen Nutzung des Overlaynetzes vom konventionellen IP over OTN Transportnetz (CDN over IP over OTN). Synchronisationsverkehre zwischen verschiedenen CDN caches erfolgen nicht direkt, sondern nur indirekt über den CDN Origin Knoten. CDN Synchronisationsverkehre zwischen CDN Origin und CDN caches nutzen abhängig vom IP Transportnetz dessen Kapazitäten und Ressourcen für das optische Transportnetz und deren IP Router

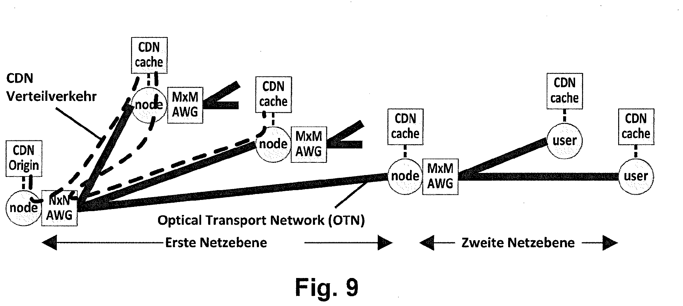

Unter Nutzung der CDN Architektur der vorliegenden Erfindung (CDN over OTN) zeigt Figur 9 CDN Synchronisationsverkehre innerhalb eines CDN von CDN Origin zu CDN caches (bidirektional) als auch direkt zwischen CDN caches über das zum IP Transportnetz unabhängige CDN over OTN Transportnetz unter Einbeziehung der erfindungsgemäßen Transportnetz Architektur, entkoppelt vom IP over OTN durch Zuweisung eigener Wellenlängenkanäle. CDN Synchronisationsverkehre zwischen CDN Origin und CDN caches als auch zwischen CDN caches untereinander nutzen vorzugsweise unabhängig vom IP Transportnetz und deren Ressourcen nur die Infrastruktur des optischen Transportnetzes OTN (CDN over OTN).

Stand der Technik für DWDM Services und kommerziell verfügbar ist derzeit eine spektrale Effizienz von 2 Bit/s/Hz, womit Datenraten von 100 Gbit/s und 40 Gbit/s mit Übertragungsbandbreiten von 50 GHz und 25 GHz über optisch transparente Strecken mit nichtkompensierten Standard Single-Mode-Fasern übertragen werden können.

In einem kommerziellen 96 Kanal DWDM System mit 50 GHz Bandbreite pro Kanal können 100 Gbit/s pro Kanal über 3.000 km optisch transparent übertragen werden [7]. 40 Gbit/s Kanäle können über 9.000 km optisch transparent übertragen werden [8].

Mit diesen gegenwärtig zur Verfügung stehenden Mitteln können erfindungsgemäß einfache und kosteneffiziente CDN Systeme aufgebaut werden, die beispielsweise einen kontinentalen Raum, z.B. den gesamten Europäischen Raum, und darüber hinaus abdecken, wobei vorzugsweise nur die notwendige Layer 1 Übertragungstechnik aufgebaut wird und die Anzahl der darüber liegenden Switch und Router Systeme minimiert werden.

Die physikalische Glasfaser-Sternnetztopologie nach Figur 3 kann auch die notwendigen Faserlängen gegenüber einer topologischen Faserteil- oder Vollvermaschung in konventionellen IP Transportnetzen verringern.

Die erfindungsgemäße Netzarchitektur umfasst vorzugsweise zwei Netzebenen, wobei die Netzsicherheit durch den Aufbau von weiteren disjunkten Sternnetzen gegenüber Faserunterbrechungen erhöht werden kann.

Zunächst wird nur eine Netzebene (bsp. die erste Netzebene) betrachtet, wobei sich im Sternpunkt vorzugsweise ein passives optisches NxN AWG Element befindet, so dass jeweils ein vollvermaschtes Netz auf der Wellenlängenebene bereitgestellt werden kann. Die Anzahl der Knoten N, einschließlich des Stern-Knotens, entspricht der Portanzahl N für die optischen Ein- und Ausgänge des NxN AWGs.

Für das optische C-Band stehen in kommerziellen DWDM Systemen z.B. 96 Kanäle mit einer Bandbreite von jeweils 50 GHz zur Verfügung. Damit stehen insgesamt 96x50GHz = 4.800 GHz Übertragungsbandbreite pro Faser für eine unidirektionale Übertragung zur Verfügung. Bei einer bidirektionalen Faseranbindung stehen für jede Richtung 4.800 GHz Bandbreite für die DWDM Kanäle zur Verfügung [9]

Aufgrund der Vollvermaschung auf der Wellenlängenebene beträgt die Knoten-zu-Knoten Bandbreite zwischen zwei beliebigen Knoten einer Netzebene gleich der Gesamtbandbreite von 4.800 GHz dividiert durch die Knotenanzahl N, die auch gleich der Anzahl der benötigten Wellenlängen für eine Vollvermaschung ist.

$$\text{Knoten-zu-Knoten Bandbreite} = 4.800 \text{ GHz} / \text{Anzahl der Knoten N (für eine Netzebene)}$$

mit N = Anzahl der Knoten der Netzebene

In Tabelle 2 ist die Zahl der bidirektionalen Knoten-zu-Knoten (K-z-K) Verbindungen bei Vollvermaschung, die Bandbreite der einzelnen K-z-K Verbindungen, die Anzahl der K-z-K DWDM Kanäle für 50 GHz, 25 GHz und 12,5 GHz Kanäle und die zur Verfügung stehende gesamte Bandbreite in einer Netzebene in Abhängigkeit von der Knotenanzahl aufgelistet.

$$\text{\# duplex links (Vollvermaschung)} = N * (N-1) / 2$$

*Tabelle 2*

| Zahl der Knoten im Netz | K-z-K Zahl der bidirektionalen Verbindungen bei Vollvermaschung | K-z-K Bandbreite In GHz | K-z-K Zahl der 50 GHz Kanäle | K-z-K Zahl der 25 GHz Kanäle | K-z-K Zahl der 12,5 GHz Kanäle | Gesamte Bandbreite im Netz in THz |
|---|---|---|---|---|---|---|
| 4 | 6 | 1200 | 24 | 48 | 96 | 7,2 |
| 6 | 15 | 800 | 16 | 32 | 64 | 12 |
| 8 | 28 | 600 | 12 | 24 | 48 | 16,8 |
| 12 | 66 | 400 | 8 | 16 | 32 | 26,4 |
| 16 | 120 | 300 | 6 | 12 | 24 | 36 |

(fortgesetzt)

| Zahl der Knoten im Netz | K-z-K Zahl der bidirektionalen Verbindungen bei Vollvermaschung | K-z-K Bandbreite In GHz | K-z-K Zahl der 50 GHz Kanäle | K-z-K Zahl der 25 GHz Kanäle | K-z-K Zahl der 12,5 GHz Kanäle | Gesamte Bandbreite im Netz in THz |
|---|---|---|---|---|---|---|
| 24 | 276 | 200 | 4 | 8 | 16 | 55,2 |
| 32 | 496 | 150 | 3 | 6 | 12 | 74,4 |
| 48 | 1128 | 100 | 2 | 4 | 8 | 112,8 |

Tabelle 2a ist eine Auflistung der Zahl der bidirektionalen Knoten-zu-Knoten (K-z-K) Verbindungen bei Vollvermaschung, die Bandbreite der einzelnen K-z-K Verbindungen, die Anzahl der K-z-K DWDM Kanäle für 50 GHz, 25 GHz und 12,5 GHz Kanäle und die zur Verfügung stehende gesamte Bandbreite im Netz in Abhängigkeit von der Knotenanzahl

$$\text{\# duplex links (Vollvermaschung \underline{und auf sich selbst})} = N * N / 2$$

*Tabelle 2a*

| Zahl der Knoten im Netz | K-z-K Zahl der bidirektionalen Verbindungen bei Vollvermaschung und auf sich selbst | K-z-K Bandbreite In GHz | K-z-K Zahl der 50 GHz Kanäle | K-z-K Zahl der 25 GHz Kanäle | K-z-K Zahl der 12,5 GHz Kanäle | Gesamte Bandbreite im Netz in THz |
|---|---|---|---|---|---|---|
| 4 | 8 | 1200 | 24 | 48 | 96 | 9,6 |
| 6 | 18 | 800 | 16 | 32 | 64 | 14,4 |
| 8 | 32 | 600 | 12 | 24 | 48 | 19,2 |
| 12 | 72 | 400 | 8 | 16 | 32 | 28,8 |
| 16 | 128 | 300 | 6 | 12 | 24 | 38,4 |
| 24 | 288 | 200 | 4 | 8 | 16 | 57,6 |
| 32 | 512 | 150 | 3 | 6 | 12 | 76,8 |
| 48 | 1152 | 100 | 2 | 4 | 8 | 115,2 |

Insbesondere können allgemein kleinere Bandbreitengranularitäten innerhalb der z.B. 50 GHz Kanäle bereitgestellt werden, um z.B. weitere unabhängige optische Übertragungskanäle für unterschiedliche Services bereitstellen zu können.

Die Gesamtkapazität in Terabit/s ergibt sich aus der Gesamtbandbreite multipliziert mit der spektralen Effizienz des Übertragungsformats.

$$\text{Gesamtkapazität (Gbit/s)} = \text{spektrale Effizienz (Bit/s/Hz)} * \text{Gesamtbandbreite (GHz)}$$

Kommerziell verfügbar ist derzeit eine spektrale Effizienz von 2 Bit/s/Hz, wobei 100 Gbit/s über eine Bandbreite von 50 GHz DWDM Kanälen über > 3.000 km optisch transparent (ohne elektrische Regeneration) übertragen werden können [7]. Damit ist die derzeit kommerziell verfügbare Gesamtkapazität in einer Netzebene in Gbit/s gleich der doppelten Gesamtbandbreite in GHz.

Höhere spektrale Effiziente sind möglich, in Abhängigkeit von der Übertragungsreichweite, die bei gleicher Bitrate mit höherer spektraler Effizienz sinkt. Derzeit können 40 Gbit/s Kanäle über 9.000 km optisch transparent übertragen werden [8].

Ein weitere Ausprägung der vorliegenden Erfindung sind optisch transparente Zusammenschaltungen der ersten Netzebene mit den verschiedenen zweiten Netzebenen in den CDN cache Knoten. Dadurch werden gegenüber konventioneller CDN Netze transparente optische Verbindungen zwischen CDN Origin, CDN cache der ersten und CDN cache der zweiten Netzebene ohne Transit IP Router möglich, so dass weitere IP Router und Energie Ressourcen eingespart werden können.

Eine Ausprägung der vorliegenden Erfindung liegt darin, dass IP Server vorzugsweise nur in den Endknoten der zweiten Netzebene benötigt werden, im Gegensatz zu konventionellen CDN Netzen, wodurch Kosten minimiert werden können.

Eine weitere bevorzugte Ausprägung der vorliegenden Erfindung ist, dass Transceiver vorzugsweise nur in den Endknoten der zweiten Netzebene benötigt werden, im Gegensatz zu konventionellen CDN Netzen, wodurch Kosten minimiert werden können.

Zusätzlich können Strategien zur Minimierung der Übertragungskapazitäten zwischen den einzelnen CDN Knoten erarbeitet werden.

Z.B. kann in einem ersten Schritt der Content von einem Knoten der zweiten Netzebene parallel zu entsprechenden Knoten in allen anderen zweiten Netzebenen, sowie zu allen Knoten in der eigenen zweiten Netzebene übertragen werden. In einem zweiten Schritt wird dann der Content in allen anderen zweiten Ebenen zu den entsprechenden Knoten in den entsprechenden zweiten Ebenen parallel übertragen. D.h. in nur zwei Schritten kann der Content parallel an alle Knoten des CDN Netzes gleichzeitig verteilt werden, wodurch eine zeitnahe Content Verteilung möglich wird. Insbesondere können hier auch die Latencies (Verzögerungen) minimiert werden, die hauptsächlich durch die Übertragungslängen der Glasfasern und nicht durch eventuelle Überlastungen in IP Routern begrenzt sind.

In den CDN cache Knoten werden die beiden Netzebenen vorzugsweise derart verschaltet, so dass jeder CDN cache Knoten der ersten Netzebene auch bestimmte CDN user Knoten in den zweiten Netzebenen transparent optisch mit bestimmten Bandbreiten erreichen kann. Damit gibt es für die zweiten Netzebenen vorzugsweise zwei unterschiedliche Verbindungsarten:

**Erste Verbindungsart:** Transparente optische vollvermaschte Verbindungen zwischen Knoten in derselben zweiten Netzebene, d.h. die nicht über die erste Netzebene geführt werden

**Zweite Verbindungsart:** Transparente optische Transitverbindungen zwischen Knoten in verschiedenen zweiten Netzebenen, die über die erste Netzebene geführt werden müssen

Eine weitere bevorzugte Ausprägung sind resilient CDN Netze mit verschiedenen Funktionalitäten die zum Teil unabhängig voneinander redundant ausgeführt werden können, z.B. ein redundantes physisches Sternnetz in der ersten Ebene, ein redundantes AWG1 in der ersten Ebene, redundante physische Sternnetze in den Bereichen der zweiten Ebene, redundante AWG2 in den Bereichen der zweiten Ebene, redundante Transitpunkte zwischen der ersten und den Bereichen der zweiten Netzebenen und redundante End-Knoten in den Bereichen der zweiten Netzebene.

Eine weitere bevorzugte Ausprägung ist, dass End-Knoten, vorzugsweise jeder End-Knoten als Zentrale für Inhalte bestimmt werden kann. Dadurch wird das CDN Netz dezentralisiert und verschiedene Content Rubriken können unterschiedlichen Zentralen zugeordnet werden. Dadurch können die Verkehre dezentralisiert und über das Netz gleichmäßiger verteilt werden. Gleichzeitig können für jeden Knoten optimale Strategien zur Verteilung der Content-Daten genutzt werden, wobei jeder Knoten im CDN Netz vorzugsweise über maximal einen Zwischenknoten mit CDN Server (2 Hops) erreichbar ist.

Eine weitere bevorzugte Ausprägung ist, dass zum Einen eine Vollvermaschung aller Knoten in der ersten Netzebene sowie zum Anderen auch Vollvermaschungen zwischen den Knoten in jedem Bereich der zweiten Netzebenen möglich sind. Eine vollständige Vollvermaschung in den einzelnen Bereichen bzw. Netzebenen muss aber beim ersten Netzaufbau nicht geplant und durchgeführt werden, sondern es kann nach Bedarf aufgebaut werden. Der weitere Ausbau des CDN Netzes kann ebenfalls nach Bedarf und Anforderungen erfolgen.

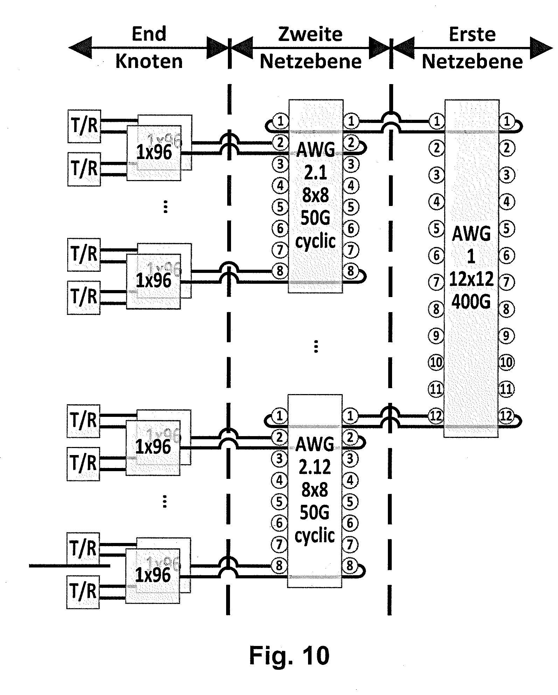

Figur 10 zeigt eine der Erfindung bevorzugte zugrundeliegende Netzarchitektur und Verschaltung der AWGs der verschiedenen Netzebenen anhand eines Beispiels mit je einem 8x8 Port AWGs in den zwölf zweiten und einem 12x12 Port AWG in der ersten Netzebene. Dabei sind 7 End-Knoten pro Bereich der zweiten Netzebene mit den AWG Ports 2 - 7 verschaltet. Die Ports 1 der zweiten Netzebene sind mit den AWG Ports der ersten Netzebene verbunden, wobei der Bereich 1 der zweiten Netzebene mit dem AWG Port 1 der ersten Netzebene, der Bereich 2 der zweiten Netzebene mit dem AWG Port 2 der ersten Netzebene, der Bereich 3 der zweiten Netzebene mit dem AWG Port 3 der ersten Netzebene, usw. bis zum Bereich 12 der zweiten Netzebene der mit dem AWG Port 12 der ersten Netzebene über Faserverbindungen verbunden sind. Dadurch ergeben sich transparente optische Verbindungen ohne weitere Komponenten im Übertragungsweg, bis auf mögliche optische Verstärker, die entsprechende Einfügedämpfungen aufgrund von Faserlängen und der AWGs ausgleichen müssen. Die Einfügedämpfung eines AWG liegt in der Größenordnung von 5 - 8 dB.

Die spezielle Verschaltung der AWGs der ersten und zweiten Ebenen kann mit verschiedenen Portzahlen N und M für die AWGs der ersten und zweiten Ebene erreicht werden, die beispielsweise in Tabelle 3 dargestellt sind. Insbesondere sind Zusammenschaltungen zwischen den Ebenen für AWGs mit Portzahlen (N, M) für folgende Kombinationen sinnvoll: (3,32), 4,24), (6,16), (8,12), (12,8), (16,6), (24,4) und (32,3), wobei M aus N nach folgender Formel abgeleitet wird: M = 4.800 GHz / 50 GHz / N = 96 / N.

Tabelle 3 zeigt beispielhaft Parameter für die Zusammenschaltung verschiedener Netzebenen zur Bereitstellung von vollvermaschten transparenten optischen Ende-zu-Ende Verbindungen zwischen Knoten im Feld in verschiedenen zweiten Netzebenen.

*Tabelle 3*

| Stage 1 N NxN AWG1 In C-band | Stage 1 AWG1 band Bandwidth in GHz | Stage 1 # of 50 GHz channels per AWG1 band | Stage 2 M MxM AWG1 cyclic | Stage 2 AWG2 band Bandwidth = 50 GHz | Stage 2 # of parallel full meshes |
|---|---|---|---|---|---|
| 3 | 1600 | 32 | 32 | 50 | 3 |
| 4 | 1200 | 24 | 24 | 50 | 4 |
| 6 | 800 | 16 | 16 | 50 | 6 |
| 8 | 600 | 12 | 12 | 50 | 8 |
| 12 | 400 | 8 | 8 | 50 | 12 |
| 16 | 300 | 6 | 6 | 50 | 16 |
| 24 | 200 | 4 | 4 | 50 | 24 |
| 32 | 150 | 3 | 3 | 50 | 32 |

Zusätzlich sind in Tabelle 3 die AWG1 Band und AWG2 Band Bandbreiten, die Anzahl der 50 GHz Kanäle für das AWG1 Band der ersten Ebene, die Anzahl der 50 GHz Kanäle für das einzelne AWG2 Band der zweiten Ebenen (= 50 GHz) und die Anzahl der vollvermaschten Netze pro Netz der zweiten Ebene dargestellt.

Insbesondere ist das NxN AWG1 der ersten Ebene so gebaut, dass es z.B. nur einen Zyklus mit N=12 Kanälen mit 400 GHz pro Kanal besitzt.

Insbesondere sind die MxM AWG2 der zweiten Ebenen so gebaut, dass sie N Zyklen mit M 50 GHz Kanälen pro Zyklus besitzen.

Insbesondere sind in dieser Erfindung alle AWG2 der zweiten Ebenen gleich aufgebaut, d.h. sie besitzen dieselben Charakteristiken und auch die gleiche Portanzahl M.

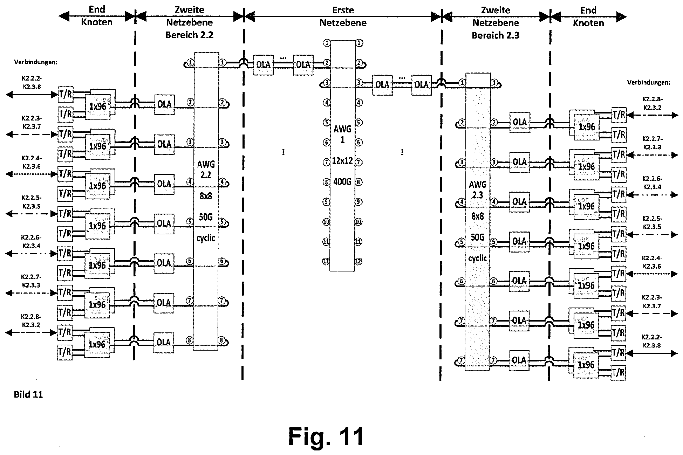

Insbesondere ergeben sich durch diese spezielle Zusammenschaltung mehrere transparente optische und damit unabhängige Verbindungen zwischen allen Bereichen der zweiten Ebenen, wobei aber nur bestimmte Knoten verschiedener zweiter Bereiche miteinander transparent optisch verbunden sind. In Figur 11 ist das Ende-zu-Ende-Knoten Verbindungsschema zwischen zwei verschiedenen Bereichen der zweiten Netzebene, Bereich 2 und Bereich 3, die über die Transitverbindungen über die erste Netzebene 1 optisch transparent verbunden sind. Dabei kann auch der Einsatz von bidirektionalen optischen Line-Amplifier (OLA) in den optisch transparenten Verbindungen in den verschiedenen Netzebenen und Bereichen notwendig werden, um Einfügedämpfungen aufgrund der Glasfaserlängen und der AWGs auszugleichen.

Für das in Figur 11 gezeigte Beispiel ergeben sich folgende Netzparameter:

- In der ersten Netzebene wird ein 12x12 AWG1 mit 12 Kanälen mit 400GHz Bandbreite eingesetzt, an das 12 verschiedene Bereiche der zweiten Ebene optisch transparent angeschlossen werden.
- Pro Bereich wird ein 8x8 AWG2 mit 8 Kanälen mit 50 GHz Bandbreite in der zweiten Netzebene eingesetzt, wobei sich die 8 Kanäle zyklisch mit der Frequenz fortsetzen, so dass insgesamt 12 zyklische Bänder mit jeweils 8 x 50 GHz Kanäle eine Gesamtzahl von 12x8 = 96 Wellenlängenkanäle mit 50 GHz bereitstehen.
- Die AWG2 Ein- und Ausgangsports 1 werden als Transitports mit dem AWG1 der ersten Netzebene verbunden.
- In einem Bereich der zweiten Netzebene können somit maximal 7 Knoten untereinander vollvermascht werden.
- Für eine Vollvermaschung in einem Bereich der zweiten Netzebene sind 8 optische Wellenlängen bevorzugt.
- Für eine Vollvermaschung in einem Bereich der zweiten Netzebene sind 7x6/2 = 21 Wellenlängenkanäle mit 50 GHz verfügbar. Wird ein 100 Gbit/s Signal über einen 50 GHz Kanal übertragen (Spektrale Effizienz gleich 2 Bit/s/Hz) dann beträgt die Übertragungskapazität innerhalb eines vollvermaschten Netzes 21x100Gbit/s = 2,1 Tbit/s
- Innerhalb eines Bereiches der zweiten Ebene sind insgesamt 96/8 = 12 parallele und unabhängige vollvermaschte Netze möglich, die z.B. durch verschiedene Services parallel und unabhängig voneinander genutzt werden können. Die gesamte Anzahl der möglichen 50 GHz Kanäle beträgt somit 21x12 = 252. Wird ein 100 Gbit/s Signal über einen 50 GHz Kanal übertragen (Spektrale Effizienz gleich 2 Bit/s/Hz) dann beträgt die gesamte Übertragungskapazität innerhalb eines Bereiches der zweiten Netzebene gleich 252x100 Gbit/s = 25,2 Tbit/s.

- Die gesamte Übertragungskapazität aller 12 Bereiche ergibt sich zu 12x25,2 Tbit/s = 302,4 Tbit/s.
- Die optisch transparenten Transitverbindungen zwischen Knoten verschiedener Bereiche der zweiten Netzebene werden vorzugsweise über die erste Netzebene geführt.
- Zwischen jedem Bereich der zweiten Ebene können 7 parallele und unabhängige Verbindungen bereitgestellt werden, die entsprechend Bild 11 z.B. die jeweiligen Knoten der ausgewählten Bereiche wie folgt verbinden: (K2.2.2 - K2.3.8), (K2.2.3 - K2.3.7), (K2.2.4 - K2.3.6), (K2.2.5 - K2.3.5), (K2.2.6 - K2.3.4), (K2.2.7 - K2.3.3), (K2.2.8 - K2.3.2). Die Lesart für z.B. K2.3.8 ist: Knoten 8 aus dem Bereich 3 der Netzebene 2. Insbesondere sind alle Knoten aus den verschiedenen Bereichen der zweiten Netzebenen nach diesem Schema (Knoten 2 aus Bereich x ist mit Knoten 8 aus Bereich y verbunden) (K2.x.2 - K2.y.8), (K2.x.3 - K2.y.7), (K2.x.4 - K2.y.6), (K2.x.5 - K2.y.5), (K2.x.6 - K2.y.4), (K2.x.7 - K2.y.3), (K2.x.8 - K2.y.2).
- In der ersten Netzebene werden 12 Transitpunkte miteinander vollvermascht, womit das vollvermaschte Netz der ersten Ebene 12x11/2 = 66 bidirektionale Verbindungen umfasst. Jede dieser Verbindungen der ersten Netzebene kann bis zu 7 Ende-zu-Ende Knotenverbindungen zwischen den entsprechenden beiden Bereichen der zweiten Netzebene führen. Somit können insgesamt 66x7 = 462 transparente optische bidirektionale 50 GHz Verbindungen über die erste Netzebene bereitgestellt werden. Wird ein 100 Gbit/s Signal über einen 50 GHz Kanal übertragen (Spektrale Effizienz gleich 2 Bit/s/Hz) dann beträgt die Übertragungskapazität innerhalb des vollvermaschten Netzes der ersten Ebene gleich 462x100Gbit/s = 46,2 Tbit/s.
- Die Gesamtkapazität des gesamten Netzes bei Vollausbau mit dem Transitnetz der ersten Ebene und den 12 Bereichen der zweiten Netzebene beträgt somit 302,4 Tbit/s + 46,2 Tbit/s = 348,6 Tbit/s.
- Wird zunächst nur ein Grundausbau des Netzes mit einer Vollvermaschung aller 12 Bereiche der zweiten Ebene mit jeweils 7 Knoten berücksichtigt, dann ergibt sich die Anzahl aller 50 GHz Kanäle zu 12x7*6/2 = 252. Wird zusätzlich nur jeweils ein 50 GHZ Kanal zwischen jedem Bereich der zweiten Netzebene über eine Vollvermaschung der ersten Ebene genutzt, dann kommen zusätzlich noch 12x11/2 = 66 Transitkanäle hinzu. Damit ergeben sich für einen Grundausbau 252 + 66 = 318 Wellenlängenkanäle mit 50 GHz Bandbreite. Wird ein 100 Gbit/s Signal über einen 50 GHz Kanal übertragen (Spektrale Effizienz gleich 2 Bit/s/Hz) dann beträgt die Übertragungskapazität für den betrachteten Grundausbau 31,8 Tbit/s.
- Die Parameter in Abhängigkeit von der Portzahl des AWG1 in der ersten Netzebene sind in Tabelle 4 zusammengefasst.
- Zur Überbrückung von Entfernungen können in der ersten und auch in den zweiten Netzebenen bidirektionale optische Line Amplifier (OLAs) eingesetzt werden. Die Zahl der in Reihe geschalteten OLAs ist durch die Gesamtlänge der Übertragung und durch die Übertragungsrate begrenzt, wobei für 100 Gbit/s Systeme bis über 3.000 km und für 40 Gbit/s Systeme bis über 9.000 km Gesamtlänge überbrückt werden können.
- In der Faserinfrastruktur werden insbesondere keine Kompensationskomponenten für z.B. Faserdispersion, Polarisationsdispersion oder ähnliches eingesetzt.

Tabelle 4 zeigt beispielhaft Netzkapazitäten bei der Zusammenschaltung von Netzebenen zur Bereitstellung von vollvermaschten transparenten optischen Ende-zu-Ende Verbindungen zwischen den Knoten der zweiten Netzebene mit Endpunkten im Feld.

Tabelle 4a zeigt beispielhaft die Netzkapazitäten bei der Zusammenschaltung von Netzebenen zur Bereitstellung von vollvermaschten transparenten optischen Ende-zu-Ende Verbindungen zwischen den Knoten der zweiten Netzebene mit Endpunkten im Feld, wobei Transitverbindungen von einem AWG2 Bereich über die AWG1 Ebene auch zurück in denselben AWG2 Bereich vorhanden sind (siehe auch Tabelle 2a).

| stage 1 N NxN AWG1 in C-Band | stage1 full mesh #of 50 GHz basic connects transit | stage 1 SE=2 capacity basic connects total Tbit/s | stage1 full mesh #of 50 GHz total connects transit | stage 1 SE=2 capacity total connects total Tbit/s | stage2 M MxM AWG2 cyclic | stage2 full mesh #of 50 GHz basic connects local (1 transit) | stage 2 SE=2 capacity basic connects local (1 transit) Tbit/s | stage2 # of parallel full meshes local (1 transit) | stage2 full mesh #of 50 GHz total connects local (1 transit) | stage 2 SE=2 capacity total connects local (1 transit) Tbit/s | all stages 2 1 transit #of 50 GHz total connects 1 transit | all stages 2 SE=2 capacity transit total connects Tbit/s | stage1 + all stages 2 total network capacity of basic connects Tbit/s | stage1 + all stages 2 total network capacity of total connects Tbit/s |
|---|---|---|---|---|---|---|---|---|---|---|---|---|---|---|
| 4 | 6,00 | 0,60 | 138,00 | 13,80 | 24,00 | 253,00 | 25,30 | 4,00 | 1.012,00 | 101,20 | 4.048,00 | 404,80 | 101,80 | 418,60 |
| 6 | 15,00 | 1,50 | 225,00 | 22,50 | 16,00 | 105,00 | 10,50 | 6,00 | 630,00 | 63,00 | 3.780,00 | 378,00 | 64,50 | 400,50 |
| 8 | 28,00 | 2,80 | 308,00 | 30,80 | 12,00 | 55,00 | 5,50 | 8,00 | 440,00 | 44,00 | 3.520,00 | 352,00 | 46,80 | 382,80 |
| 12 | 66,00 | 6,60 | 462,00 | 45,20 | 8,00 | 21,00 | 2,10 | 12,00 | 252,00 | 25,20 | 3.024,00 | 302,40 | 31,80 | 348,60 |
| 16 | 120,00 | 12,00 | 600,00 | 60,00 | 6,00 | 10,00 | 1,00 | 16,00 | 160,00 | 16,00 | 2.560,00 | 256,00 | 28,00 | 316,00 |
| 24 | 276,00 | 27,60 | 828,00 | 82,80 | 4,00 | 3,00 | 0,30 | 24,00 | 72,00 | 7,20 | 1.728,00 | 172,80 | 34,80 | 255,60 |
| 32 | 496,00 | 49,60 | 992,00 | 99,20 | 3,00 | 1,00 | 0,10 | 32,00 | 32,00 | 3,20 | 1.024,00 | 102,40 | 52,80 | 201,60 |

*Tabelle 4*

| stage 1 N NxN AWG1 in C-Band | stage1 full mesh # of 50 GHz basic connects transit | stage 1 SE=2 capacity basic connects total Tbit/s | stage1 full mesh # of 50 GHz total connects transit | stage 1 SE=2 capacity total connects total Tbit/s | stage2 M MxM AWG2 cyclic | stage2 full mesh # of 50 GHz basic connects local (1 transit) | stage 2 SE=2 capacity basic connects local (1 transit) Tbit/s | stage2 # of parallel full meshes local (1 transit) | stage2 full mesh # of 50 GHz total connects local (1 transit) | stage 2 SE=2 capacity total connects local (1 transit) Tbit/s | all stages 2 1 transit # of 50 GHz total connects 1 transit | all stages 2 SE = 2 capacity transit total connects Tbit/s | stage1 + all stages 2 total network capacity of basic connects Tbit/s | stage1 + all stages 2 total network capacity of total connects Tbit/s |
|---|---|---|---|---|---|---|---|---|---|---|---|---|---|---|
| 4 | 8,00 | 0,80 | 184,00 | 18,40 | 24,00 | 253,00 | 25,30 | 4,00 | 1.012,00 | 101,20 | 4.048,00 | 404,80 | 102,00 | 423,20 |
| 6 | 18,00 | 1,80 | 270,00 | 27,00 | 16,00 | 105,00 | 10,50 | 6,00 | 630,00 | 63,00 | 3.780,00 | 378,00 | 64,80 | 405,00 |
| 8 | 32,00 | 3,20 | 352,00 | 35,20 | 12,00 | 55,00 | 5,50 | 8,00 | 440,00 | 44,00 | 3.520,00 | 352,00 | 47,20 | 387,20 |
| 12 | 72,00 | 7,20 | 504,00 | 50,40 | 8,00 | 21,00 | 2,10 | 12,00 | 252,00 | 25,20 | 3.024,00 | 302,40 | 32,40 | 352,80 |
| 16 | 128,00 | 12,80 | 640,00 | 64,00 | 6,00 | 10,00 | 1,00 | 16,00 | 160,00 | 16,00 | 2.560,00 | 256,00 | 28,80 | 320,00 |
| 24 | 288,00 | 28,80 | 864,00 | 86,40 | 4,00 | 3,00 | 0,30 | 24,00 | 72,00 | 7,20 | 1.728,00 | 172,80 | 36,00 | 259,20 |
| 32 | 512,00 | 51,20 | 1.024,00 | 102,40 | 3,00 | 1,00 | 0,10 | 32,00 | 32,00 | 3,20 | 1.024,00 | 102,40 | 54,40 | 204,80 |

*Tabelle 4a*

Im Folgenden werden kurz erfindungsgemäße Merkmale kurz und stichpunktartig erläutert.

Subkanäle werden vorzugsweise transparent in die Fläche an die dedizierten Punkte geführt.

Übertragung über dedizierte transparente optische Verbindungen von Lokationen in der Fläche aufgrund der erfindungsseitigen Transportnetz Architektur möglich.

Innerhalb eines CDN sind transparente CDN over OTN Verbindungen zwischen CDN Origin und CDN caches, zwischen CDN cache und CDN cache der gleichen Netzebene, als auch zwischen CDN caches unterschiedlicher Netzebenen möglich.

Zwischen verschiedenen CDNs sind transparente CDN over OTN Verbindungen zwischen CDN Origins, zwischen CDN Origin und CDN caches, als auch zwischen CDN caches möglich.

Aufgrund der erfindungsgemäßen Transportnetz Architektur wird eine Vollvermaschung zwischen den CDN Origin Knoten der ersten Netzebene als auch zwischen den CDN caches innerhalb eines jeden Bereiches der zweiten Netzebenen möglich.

Aufgrund der erfindungsseitigen hierarchischen Transportnetz Architektur wird eine transparente Teilvermaschung zwischen den user-Knoten innerhalb eines CDNs möglich.

Mehrere Sub-Netze mit unterschiedlichen Lokationen sind möglich.

Mehrere vollvermaschte Sub-Netze sind innerhalb eines Sub-Netzes möglich (dediziertes CDN Netz)

Aufgrund der erfindungsseitigen Transportnetz Architektur sind mehrere dieser vollvermaschten virtuellen Netze gleichzeitig möglich. (verschiedene CDN Netz Services).

Mehrere Verbindungsservices sind im gleichen CDN vollvermaschten Netz gleichzeitig möglich, z.B. CDN Datenverkehr und CDN Synchronisationsverkehr.

Aufgrund der erfindungsseitigen Transportnetz Architektur sind Latency Reduktionen durch transparente optische Ende-zu-Ende Verbindungen, sowie eine dedizierte und adaptierbare Bandbreitenkontrolle möglich.

Aufgrund der erfindungsseitigen Transportnetz Architektur ist eine Kosten effektive Bereitstellung der hier beschriebenen Netzarchitektur + Extended Feeder in die Fläche. Plus extreme Skalierbarkeit in Verbindung mit fein granularer Bandbreite möglich.

Beim Ausbau sind nur Änderungen am Rand der zweiten Netzebenen erforderlich, z.B. für die Bereitstellung einer Faseranbindung zu neuen Standorten. Insbesondere sind keine Änderungen in der ersten Netzebene sowie deren Verschaltung mit den zweiten Netzebenen notwendig. Zusätzlich sind keine Änderungen am konventionellen IP-Protokoll notwendig.

Aufgrund der Erfindung kann das dedizierte CDN Netz (CDN over OTN) unabhängig von dem konventionellen IP Transportnetz (IP over OTN) und dessen optische Transportnetz und IP Router Ressourcen betrieben werden.

Rekursive Anwendung des Konzeptes im Bereich Access / Aggregation möglich.

Die Erfindung beinhaltet die Nutzung transparenter optisch gerouteten Netzebenen und deren aktive und passive Verschaltungen zu einem Gesamtkonzept für ein einfaches, skalierungsfähigen und kosteneffizienten CDN Netz mit geringen CAPEX und reduziertem OPEX für deren Auf- und Ausbau, die den zukünftigen multi-TBit/s Verkehrsbedarf abdecken können. Dabei kann ein kontinentales Netz mit transparenten Längen >10.000 km aufgebaut werden, wodurch der Einsatz von Switchen und Routern durch die optische Vollvermaschung minimiert wird und vorzugsweise transparente optische 1-Hop Verbindungen zwischen den CDN Origin und CDN caches bereitgestellt werden. Dadurch wird zusätzlich auch der Energiebedarf erheblich reduziert.

Für die Übertragung über mehrere 100km bis mehrere 1000km können optische Transportnetze (OTN) verwendet werden die optisch transparente Verbindungen bereitstellen, wobei insbesondere optische Verstärker im C-Band, z.B. Stand der Technik: Erbium doped fiber amplifiers (EDFA), eingesetzt werden können. Insbesondere sollen aber keine Maßnahmen zur Dispersionskompensation im Fasernetz des OTN durchgeführt werden. Damit besteht die transparente optische Verbindung nur aus Glasfasern und optischen Verstärkern. Die Kompensation von weiteren Einflüssen, z.B. Dispersion, Polarisationsmodendispersion, usw. wird durch digitale Signalprozessierung in den Transceivern durchgeführt (SdT).

## Vorteile

Die Erfindung ermöglicht gegenüber herkömmlichen Netzen die kosteneffektive Bereitstellung von hochkapazitiven CDN Services über die erfindungsgemäße passive transparente optisch geroutete Architektur. Unterstützung der CDN Architektur von einem oder wenigen Origin und vielen cache Servern.

Die Erfindung ermöglicht gegenüber herkömmlichen Netzen die hoch skalierende Bereitstellung von hochkapazitiven CDN Services über die erfindungsgemäße passive transparente optisch geroutete Architektur. Das ist notwendig um die erwarteten Kapazitätszuwächse von >100% pro Jahr bereitstellen zu können.

Die Erfindung ermöglicht die Vollvermaschung dedizierter CDN Subnetze, wobei mehrere Ebenen für unterschiedliche Aufgaben getrennt und unabhängig voneinander genutzt werden können, z.B. für CDN Datenverkehr, oder CDN Synchronisationsverkehr, ...

Die Erfindung kann als separates Netz (Overlay) implementiert werden und bietet Netzbetreibern somit eine Möglichkeit zur Migration sowohl hin zu Software gesteuerten Netzen (SDN) als auch einen Einstieg in die Netz- Virtualisierung mit dem Ziel vorhandene Technik besser auszunutzen, was jedoch nicht Inhalt dieses Patentes ist.

Die Erfindung ermöglicht unabhängige und blockierungsfreie Verbindungen sowohl zwischen den einzelnen Standorten als auch für die einzelnen Applikationen (CDN Verteilnetz, CDN Synchronisation, CDN Interconnections, weitere zukünftige Applikationen) durch die Zuweisung von optischen Wellenlängen für die entsprechenden Verbindungen.

Die Content Verteilung wird entscheidend vereinfacht und erfolgt mittels einer Kombination aus gerichteter passiver optischer Verteilung und nativem IP. Der Einsatz komplexer Protokolle wie Multicast ist damit nicht mehr notwendig, die Skalierbarkeit des Ansatzes wird massiv (um Größenordnungen) erhöht.

Die Erfindung ermöglicht die applikationsagnostische Zuweisung von Kapazitäten und Ressourcen im optischen Transportnetz.

Die Erfindung ermöglicht einen Ersatz von komplexen, daher kostenintensiven Multicast-Bäumen im IP-Protokoll durch entsprechende Konfiguration der Wellenlängen in der vorgeschlagenen Netzarchitektur.

Die Erfindung ermöglicht die Abbildung dynamisch schwankender Verkehrsbedarfe (Verkehrsmatrizen) ohne die Stabilität des Netzes, wie bei IP/MPLS möglich, zu beeinträchtigen.

Die Erfindung ermöglicht die Übertragung von vielen Quellen an eine Senke mit stufenloser Einstellung der Kapazität pro Quelle. (engl. Multipoint-to-Point). Dadurch ermöglicht die Erfindung den Lastausgleich (engl. Load Balancing) zwischen verschiedenen Applikationen auf unterschiedlichen Quellservern. Anwendungsfälle sind Content Delivery Netzwerke, Hybride Netze.

Die Erfindung ermöglicht die einfache optische Replikation von Content.

Durch die Erfindung ist die schnelle Optimierung der vorgeschlagenen CDN Netzarchitektur durch zu- oder Abschaltung von einzelnen und unabhängigen transparenten Link-Kapazitäten aufgrund von Link-Messungen jederzeit möglich, im Gegensatz zu der Steuerung und Optimierung von IP Netzen durch Linkgewichte und Verkehrsmatizen, die z.B. nur einmal pro Tag durchgeführt werden, um Netzinstabilitäten zu vermeiden.

Durch die Erfindung ist die transparente Anbindung zu den CDN Standorten in der Fläche möglich, wobei die begrenzten Anzahlen von CDN Standorten transparent und kosteneffizient über separate freie Fasern in der bestehenden Netzinfrastruktur zu den Sternpunkten der CDN Topologie geschaltet werden sollen.

Bisher werden alle CDN Verbindungen über IP/MPLS Router Verbindungen geschaltet (CDN over IP over OTN) und nutzen deren OTN und IP Router Ressourcen.

Hier werden alle CDN Verbindungen über ein transparentes, vom IP Transportnetz unabhängiges, CDN over OTN Netz bereitgestellt.

Bisher sind CDN Verbindungen vom IP Transportnetz abhängig. Die CDN Verhehre werden mit vielen anderen Verkehren gemeinsam (geshared) übertragen, so dass Verluste durch Überlast auftreten können.

Hier sind die CDN Verbindungen vom IP Transportnetz unabhängig. Eine gegenseitige Beeinflussung von CDN Verkehren mit IP Transportnetzverkehren ist ausgeschlossen.

Bisher bestehen keine direkten CDN Verbindungen zwischen CDN caches. Die CDN caches stehen nur mit den CDN Origin in Verbindung aufgrund der physikalischen CDN over IP Sternstruktur.

Hier bestehen transparente Verbindungen zwischen CDN cache Knoten verschiedener Bereiche der zweiten Netzebenen, aufgrund der logischen und Wellenlängen adressierten Vermaschung.

Bisher bestehen keine direkten optisch transparenten CDN Verbindungen zwischen CDN cache und CDN Origin bzw. CDN cache.

Hier können transparente optische Verbindungen zwischen ausgewiesenen CDN cache Knoten und CDN Origin oder CDN cache Knoten über ausgewiesene optisch transparente Wellenlängenkanäle geschaltet werden.

Bisher ist keine transparente optische CDN Anbindung der CDN caches möglich.

Hier ist eine transparente optische CDN cache Anbindung möglich.

Bisher ist keine transparente optische Vollvermaschung der CDN cache Knoten möglich.

Hier sind in den hierarchischen Ebenen (CDN Origin und CDN cache Ebene, CDN cache und CDN cache Ebene) transparente optische Vollvermaschungen zwischen den entsprechenden Knoten möglich.

Bisher wurden alle CDN Services über dasselbe IP Transportnetz geführt, wobei sich die CDN Verkehre die IP Transportnetz Ressourcen mit weiteren CDN fremden Services teilen mussten, dass für hohe Verkehraufkommen zu Service Verlusten führt.

Hier können die verschiedenen CDN Services über eigene dedizierte CDN over OTN Kanäle geführt werden. Dadurch ist sowohl die gegenseitige Abhängigkeit der CDN Services als auch die Abhängigkeit vom IP Transportnetz und deren CDN fremden Services ausgeschlossen. Außerdem können die verschiedenen CDN Services entsprechend ihren Anforderungen (Kapazität, Zeitverhalten, Latency, Verluste, etc.) individuell gemanaged und bereitgestellt werden.

Bisher ist die logische CDN Netzstruktur eine Sternstruktur.

Hier kann die logische CDN Struktur zu einer Vollvermaschung in den Netzebenen erweitert werden.

Bisher waren unabhängige transparente optische Verbindungen zwischen den CDN Knoten unterschiedlicher Ebenen nicht möglich.

Hier können unabhängige transparent optische Verbindungen zwischen den CDN Origin und CDN cache Knoten optisch transparent bereitgestellt werden.

Bisher sind keine parallelen und unabhängigen Datenübertragungen zwischen den Knoten in den einzelnen Netzen der zweiten Ebene möglich.

Hier sind parallele und unabhängige Datenübertragungen zwischen ausgewiesenen Knoten in den einzelnen Bereichen der zweiten Netzebenen möglich.

Bisher ist nur eine zentralisierte Netzstruktur mit einem festgelegten Sternpunkt möglich.

Hier sind mehrfache zentralisierte und unabhängige Netzstrukturen mit wählbaren Sternpunkten parallel möglich. Auch dezentrale Strukturen mit mehreren Sternpunkten sind möglich, die unabhängig voneinander, aber gemeinsam gesteuert und kontrolliert, parallel Datenübertragungen durchführen können.

Bisher ist keine parallele und unabhängige Verteilung von Content möglich.

Hier sind zeitnahe parallele Verteilungen von Content in bis zu zwei Schritten an alle Knoten des CDN Netzes möglich.

**Referenzen**

[1] E. Nygren, R. K. Sitaraman, and J. Sun. The Akamai Network: A Platform for Highperformance Internet Applications. SIGOPS Oper. Syst. Rev., 2010.

[2] Benjamin Frank, et all, "Pushing CDN-ISP Collaboration to the Limit", TU Berlin, bfrank@net.t-labs.tu-berlin.de; ACM SIGCOMM Computer Communication Review 35 Volume 43, Number 3, July 2013

[3] Cisco Visual Networking Index: Forecast and Methodology, 2012-2017, May 29, 2013

[4] http://www.streamzillacdn.com/streamzilla-network/

[5] Sandvine Report: http://www.sandvine.com/

[6] TorNet Architektur; http://www.vde-verlag.de/proceedings-en/453437032.html

[7] DWDM 100 Gbit/s über 3000 km Übertragung; http://www.cisco.com/en/US/prod/collateral/optical/ps5724/ps2006/data-sheet-c78-713296.html

[8] DWDM 40 Gbit/s über 9000 km Übertragung; http://www.mitsubishielectric.com/company/rd/advance/pdf/voll39/139_TR2.pdf

[9] 96 Kanal DWDM System; http://www.cisco.com/en/US/prod/collateral/optical/ps5724/ps2006/data-sheet-c78-713296.html

[10] ITU-T, Quelle Recommendation ITU-T G.694.1

[11] 40Gbit/s over 11.000 km Submarine Cable unrepeated; http://www.submarinenetworks.com/systems/trans-pacific/tgn-pacific/40gbps-transmission-over-tgn

**Patentansprüche**

1. Content Delivery Netzwerk, CDN, mit mindestens einem CDN Origin Knoten (1) und mehreren CDN cache Knoten (2, 3), die mit dem CDN Origin Knoten (1) über ein optisches Transportnetz, OTN, verbunden sind,

   wobei das OTN vom CDN Origin Knoten (1) zu den mehreren CDN cache Knoten (2) eine erste CDN Netzebene (100) darstellt, und das optische Routing mittels NxN AWGs, Arrayed Waveguide Gratings, (11) erfolgt, und eine Vollvermaschung durch DWDM, Dense Wavelength Division Multiplex, Kanäle erfolgt, **dadurch gekennzeichnet, dass**

eine zweite CDN Netzebene (200) von CDN cache Knoten (3) gebildet wird, die über optische MxM AWG Elemente (21) mit der ersten CDN Netzebene (100) verbunden sind, wodurch auch in der zweiten CDN Netzebene (200) eine Wellenlängen adressierte Vollvermaschung für transparente optische Verbindungen zwischen den CDN Origin (1) und CDN cache Knoten (3) möglich wird,

wobei der mindestens eine CDN Origin Knoten (1) und die mehreren CDN cache Knoten (2, 3) derart ausgestaltet sind, dass die Übertragung und/oder das Routing vom CDN cache Knoten (2, 3) zum CDN Origin Knoten (1) und/oder umgekehrt unterhalb der Schicht 3 des OSI Models erfolgt, und

die Übertragung von Daten bzw. das Routing von CDN cache Knoten (2, 3) zum CDN Origin Knoten (1) und umgekehrt ohne ein IP Overlaynetz erfolgt.

2. CDN nach Anspruch 1, wobei das optische Transportnetz ein passives transparentes optisch geroutete Transportnetz ist, vorzugsweise ein OTN nach ITU-T Standard G.709 ist, so dass eine direkte transparente optische Verbindung

   i) von einem CDN cache Knoten (2, 3) zu einem CDN Origin Knoten (1), und umgekehrt; und/oder
   ii) von einem CDN cache Knoten (2, 3) zu einem anderen CDN cache Knoten (2, 3; 3, 2), und umgekehrt, möglich ist.

3. CDN nach Anspruch 1 oder 2, wobei die CDN cache Knoten (2, 3) mit dem CDN Origin Knoten (1) über eine Sterntopologie, verbunden sind.

4. CDN nach einem der vorhergehenden Ansprüche, wobei folgende N, M Kombinationen: [3, 32]; [4,24]; [6,16]; [8, 12]; [12,8]; [16, 6]; [24, 4] und [32, 3] möglich sind.

5. CDN nach einem der vorhergehenden Ansprüche, wobei das CDN mit einem weiteren CDN über ein optisches Transportnetz verbunden ist, so dass Verkehre (5) zwischen den beiden CDNs unterhalb der Schicht 3 des OSI Models, vorzugsweise direkt, passiv und optisch transparent geroutet werden, vorzugsweise bidirektional.

6. CDN nach Anspruch 5, wobei die Verkehre zwischen den CDN Origin Knoten der beiden CDN Netze erfolgen und/oder zwischen verschiedenen CDN Origin und CDN cache Knoten erfolgen.

7. CDN nach einem der vorhergehenden Ansprüche, wobei unterschiedliche CDN Services, wie CDN Contentverkehre, CDN Synchronisationsverkehre und CDN Interconnectionsverkehre, mittels unterschiedlicher Wellenlängen adressierter optischer Kanäle separat und unabhängig voneinander übertragen und/oder geroutet werden.

8. Verfahren zur Übertragung, Delivery, und Verteilen von digitalen Inhalten, Content, über ein Content Delivery Networks, CDN, mit mindestens einem CDN Origin Knoten und mehreren CDN cache Knoten, die mit dem CDN Origin Knoten über ein CDN nach einem der Ansprüche 1 bis 7 verbunden sind, **dadurch gekennzeichnet, dass** das Routing der zu übertragenden digitalen Inhalte von dem mindestens einen CDN Origin Knoten zu den mehreren CDN cache Knoten, und umgekehrt, unterhalb der Schicht 3 des OSI Models erfolgt.

**Claims**

1. A content delivery network, CDN, comprising at least one CDN origin node (1) and multiple CDN cache nodes (2, 3) which are connected to the CDN origin node (1) via an optical transport network, OTN, wherein the OTN represents a first CDN network level (100) from the CDN origin node (1) to the multiple CDN cache nodes (2) and the optical routing is performed by means of NxN AWGs, arrayed waveguide gratings, (11), and full meshing is realized by DWDM, dense wavelength division multiplex, channels, **characterized in that** a second CDN network level (200) is formed by CDN cache nodes (3) which are connected via optical MxM AWG elements (21) to the first CDN network level (100) so that also in the second CDN network level (200) a wavelength-addressed full meshing becomes possible for transparent optical connections between the CDN origin (1) and CDN cache nodes (3),

   wherein the at least one CDN origin node (1) and the multiple CDN cache nodes (2, 3) are configured such that the delivery and/or the routing from the CDN cache node (2, 3) to the CDN origin node (1) and/or vice versa is performed below layer 3 of the OSI model, and

   the delivery of data and/or the routing of CDN cache nodes (2, 3) to the CDN origin node (1) and vice versa is performed without an IP overlay network.

2. The CDN according to claim 1, wherein the optical transport network is a passive transparent optically routed transport network, preferably an OTN according to ITU-T standard G.709, so that a direct transparent optical connection

    (i) from a CDN cache node (2, 3) to a CDN origin node (1) and vice versa, and/or
    (ii) from a CDN cache node (2, 3) to a different CDN cache node (2, 3; 3, 2) and vice versa is possible.

3. The CDN according to claim 1 or 2, wherein the CDN cache nodes (2, 3) are connected to the CDN origin node (1) via a star topology.

4. The CDN according to any one of the preceding claims, wherein the following N, M combinations: [3, 32]; [4,24]; [6,16]; [8, 12]; [12,8]; [16, 6]; [24, 4] und [32, 3] are possible.

5. The CDN according to any one of the preceding claims, wherein the CDN is connected to a further CDN via an optical transport network so that interconnection traffics (5) between the two CDNs are routed below layer 3 of the OSI model preferably directly, passively and optically transparently, preferably bidirectionally.

6. The CDN according to claim 5, wherein the interconnection traffics are realized between the CDN origin nodes of the two CDN networks and/or between different CDN origin and CDN cache nodes.

7. The CDN according to any one of the preceding claims, wherein different CDN services such as CDN content traffics, CDN synchronization traffics and CDN interconnection traffics are delivered and/or routed by means of different wavelength-addressed optical channels separately and independent of one another.

8. A method for delivering and distributing digital contents via a content delivery network, CDN, comprising at least one CDN origin node and multiple CDN cache nodes which are connected to the CDN origin node via a CDN in accordance with any one of claims 1 to 7,
    **characterized in that** the routing of the digital contents to be delivered from the least one CDN origin node to the multiple CDN cache nodes and vice versa is performed below layer 3 of the OSI model.


**Revendications**

1. Réseau de diffusion de contenu, CDN, avec au moins un noeud d'origine CDN (1) et plusieurs noeuds de cache CDN (2, 3) reliés au noeud d'origine CDN (1) par un réseau de transport optique, OTN,
    où l'OTN constitue un premier niveau de réseau CDN (100) du noeud d'origine CDN (1) aux plusieurs noeuds de cache CDN (2), et le routage optique est effectué au moyen de réseaux sélectifs planaires AWG NxN, (11), et un maillage intégral est effectué par des canaux de multiplexage par division d'ondes denses DWDM, **caractérisé en ce qu'**un deuxième niveau de réseau CDN (200) est formé par des noeuds de cache CDN (3) reliés au premier niveau de réseau CDN (100) par des éléments optiques AWG MxM (21), un maillage intégral à adressage de longueur d'onde étant ainsi rendu possible dans le deuxième niveau de réseau CDN (200) pour des connexions optiques transparentes entre le noeud origine CDN (1) et les noeuds de cache CDN (3),
    ledit au moins un noeud d'origine CDN (1) et les plusieurs noeuds de cache CDN (2, 3) étant configurés de telle manière que la transmission et/ou le routage sont effectués du noeud de cache CDN (2, 3) au noeud d'origine CDN (1) et/ou inversement en dessous de la couche 3 du modèle OSI, et
    la transmission de données et/ou le routage étant effectués du noeud de cache CDN (2, 3) au noeud d'origine CDN (1) et inversement sans réseau IP superposé.

2. CDN selon la revendication 1, où le réseau de transport optique est un réseau de transport transparent passif routé optiquement, de préférence un OTN conforme à la norme ITU-T G.709, de sorte qu'une liaison optique transparente directe est rendue possible

    i) d'un noeud de cache CDN (2, 3) à un noeud d'origine CDN (1), et inversement ; et/ou
    ii) d'un noeud de cache CDN (2, 3) à une autre noeud de cache CDN (2, 3 ; 3, 2), et inversement.

3. CDN selon la revendication 1 ou la revendication 2, où les noeuds de cache CDN (2, 3) sont reliés au noeud d'origine CDN (1) par une topologie en étoile.

**4.** CDN selon l'une des revendications précédentes, où les combinaisons N, M suivantes : [3, 32] ; [4,24] ; [6,16] ; [8, 12] ; [12,8] ; [16, 6] ; [24, 4] et [32, 3] sont possibles.

**5.** CDN selon l'une des revendications précédentes, où le CDN est relié à un autre CDN par un réseau de transport optique, si bien que des trafics (5) sont routés entre les deux CDN en dessous de la couche 3 du modèle OSI, de préférence directement, passivement et de manière optiquement transparente, de préférence bidirectionnellement.

**6.** CDN selon la revendication 5, où les trafics sont effectués entre les noeuds d'origine CDN des deux réseaux CDN et/ou entre différents noeuds d'origine CDN et noeuds de cache CDN.

**7.** CDN selon l'une des revendications précédentes, où différents services CDN, tels que des trafics de contenu CDN, des trafics de synchronisation CDN et des trafics d'interconnexion CDN, sont transmis et/ou routés séparément et indépendamment les uns des autres au moyen de canaux optiques à adressages de longueur d'onde différents.

**8.** Procédé de transmission, Delivery et de répartition de contenus numériques, Content, via un réseau de diffusion de contenu, CDN, avec au moins un noeud d'origine CDN et plusieurs noeuds de cache CDN, reliés au noeud d'origine CDN par un CDN selon l'une des revendications 1 à 7, **caractérisé en ce que** le routage des contenus numériques à transmettre est effectué dudit au moins un noeud d'origine CDN aux plusieurs noeuds de cache CDN, et inversement, en dessous de la couche 3 du modèle OSI.

Fig. 1

**Fig. 2**

(Stand der Technik)

**Fig. 3**

EP 2 963 871 B1

**Fig. 4**

(Stand der Technik)

23

**Fig. 5**

**Fig. 6**

(Stand der Technik)

Fig. 7

**Fig. 8**

(Stand der Technik)

Fig. 9

EP 2 963 871 B1

Fig. 10

29

Bild 11

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100238924 A1
- WO 0155855 A1
- WO 2013164044 A1
- EP 2073501 A1

**In der Beschreibung aufgeführte Nicht-Patentliteratur**

- **CSABA KISS KALLO et al.** *Benefits of optical packet switching for router by-pass in metro networks,* 04. Juli 2012
- **ADEL A. M. SALEH et al.** *All-Optical Networking Evolution, Benefits, Challenges, and Future Vision,* 01. Mai 2012, 1105-1117
- **E. NYGREN ; R. K. SITARAMAN ; J. SUN.** The Akamai Network: A Platform for Highperformance Internet Applications. *SIGOPS Oper. Syst. Rev.,* 2010
- **BENJAMIN FRANK.** Pushing CDN-ISP Collaboration to the Limit. *ACM SIGCOMM Computer Communication Review 35,* Juli 2013, vol. 43 (3, bfrank@net.t-labs.tu-berlin.de
- Cisco Visual Networking Index. *Forecast and Methodology,* 29. Mai 2013